# EUROPEAN PATENT SPECIFICATION

(11) **EP 4 588 404 B1**
(45) Date of publication and mention of the grant of the patent: **01.04.2026**
(21) Application number: 25151943.5
(22) Date of filing: 15.01.2025
(51) Int. Cl.: A47F 3/04, A23G 9/00, F25B 25/00

(54) **IMPROVED REFRIGERATED DISPLAY COUNTER WITH GLYCOL AND VENTILATED COOLING**
VERBESSERTE KÜHLTHEKE MIT GLYKOL UND BELÜFTETER KÜHLUNG
COMPTOIR FRIGORIFIQUE AMÉLIORÉ AVEC REFROIDISSEMENT PAR GLYCOL ET VENTILATION

(30) Priority: 17.01.2024 IT 202400000810
(43) Date of publication of application: 23.07.2025
(73) Proprietor: BRX Srl, 61025 Montelabbate (PU) (IT)
(72) Inventor: ROVERE, Roberto, 61121 PESARO (IT)
(74) Representative: Baldi, Claudio

(56) References cited:
- IT-A1- RN20 130 014
- ANONYMOUS: "Pozzetti - Brx italia", 25 September 2023 (2023-09-25), XP093152956, Retrieved from the Internet <URL:https://web.archive.org/web/20230925172041/https://brxitalia.com/pozzetti/>

## Description

The present patent application for industrial invention relates to an improved refrigerated display counter with ventilated and glycol cooling.

As it is well known, refrigerated display counters are used both to store food at a low temperature and to display such food to the public.

Refrigerated display counters have a basically standardized structural design that comprises a base, an outer casing supported by the base, and a storage/display structure that is disposed inside the outer casing and is suitable for storing food products that are intended to remain visible during sale.

Moreover, refrigerated display counters comprise a large front glass surface through which customers can view the products that are displayed and stored in the storage/display structure.

The storage/display structure can be used either to store products at a low temperature, such as ice cream and the like, or products at a higher temperature, such as confectionery products, pastry and the like.

In relation to each specific use, the refrigerated display counter is equipped differently depending on whether the storage/display structure is used to contain and store ice cream or confectionery products and the like.

In the case where the refrigerated display counter is used to contain confectionery products or the like, the storage/display structure is provided with one or more shelves whereon trays with the confectionery products are disposed, and refrigeration is provided by fans that move the air that is cooled by means of a coil acting as evaporator. The coil acting as evaporator is an integral part of a refrigeration system that also comprises a compressor, a condenser and a lamination valve or thermal expansion valve wherein a heat transfer liquid flows.

In the case where the refrigerated display counter is used to store and display ice cream, the storage/display structure comprises a plurality of housings wherein pans suitable for containing ice cream, whipped cream or the like are arranged.

Three types of refrigerated counters for ice cream are known: ventilated, glycol, and mixed.

In the refrigerated counters with ventilated cooling, the housings of the storage/display structure, wherein the pans are arranged, are defined by wire baskets.

In such a case cooling is obtained in essentially the same manner as the cooling of the confectionery products described above. More precisely, cold conduction is always provided by fans that move the air that is cooled by a coil acting as evaporator that is an integral part of a refrigeration system. The fans distribute the cold air in a uniform way around the pans disposed in the wire baskets.

Considering that ice cream must be stored at a much lower temperature than confectionery products, in such a case the refrigeration system is configured in such a way that the evaporator is at a very low temperature so as to lower the temperature of the airflow lapping the pans. However, the low temperature of the airflow tends to freeze the walls of the pans and therefore the cooling process must be interrupted periodically to defrost.

In the refrigerated display counters with glycol cooling, the storage/display structure has a series of tubs defining the housings wherein the pans are arranged. Furthermore, the refrigerated structure has a cavity that surrounds the tubs and is filled with glycol. The term "glycol" refers to a heat transfer liquid that is generally a mixture of water and glycol (60% pure glycol and 40% water) or pure glycol (100% pure glycol). Hereinafter, the term "glycol" indicates either pure glycol or a mixture of glycol and water.

In such a case, the ice cream is cooled by a coil inserted in the cavity containing the glycol. The coil is an integral part of a refrigeration system and is crossed by a cold heat transfer fluid. Therefore the coil cools the glycol, which cools the tubs by heat exchange and indirectly cools the pans arranged in the housings.

Such a solution is recognized as the best condition for storing the ice cream because it ensures a static, indirect and uniform cold for the ice cream contained in the pans. Nevertheless, such refrigerated display counters with glycol cooling are impaired by the fact that they do not provide an efficient cooling of the upper surface of the ice cream contained in the pans, and therefore an insulating lid is usually placed onto the housing. Obviously, the presence of the lid prevents customers from seeing the ice cream contained in the pans.

The refrigerated display counters with mixed cooling (glycol and air cooling) take advantage of both the glycol cooling system and of the air cooling system that sends cold air onto the storage/display structure to lap the upper surface of the ice cream.

In such a case, the storage/display structure of the refrigerated display counter is placed inside the outer casing in such a way as to define a channel between the outer casing and the storage/display structure. The storage/display structure comprises a plurality of tubs that define housings and are surrounded by a cavity that is filled with glycol.

Each tub is suitable for holding one or more stacked pans that contain ice cream, whipped cream or the like.

A refrigerated display counter with mixed cooling comprises two separate refrigeration systems, namely:
- a first refrigeration system with a circulation of a first heat transfer fluid; the first refrigerated system comprises a compressor, a condenser, a thermal expansion valve, and an evaporator located in the channel, and
- a second refrigeration system with a circulation of a second heat transfer fluid; the second refrigeration system comprises a compressor, a condenser, a thermal expansion valve, and a coil (acting as evaporator) positioned in the cavity in order to cool the glycol.

The channel defined by the storage/display structure and by the outer casing is provided with a fan that generates an airflow that enters an inlet of the channel, passes through the evaporator to cool, and exits from an outlet of the channel so as to lap the upper surface of the ice cream contained in the pans.

All this being said, because of the low storage temperature of the ice cream, the refrigerated display counters used to store ice cream cannot be used for the display and sale of cakes, confectionery products and the like.

More precisely, if a refrigerated display counter is designed to store ice cream, it cannot be adapted to store confectionery products, and similarly a refrigerated display counter designed to store confectionery products cannot be adapted to store ice cream.

In view of the above, the refrigerated display counters of the prior art are not versatile in the sense that they cannot be easily converted according to the type of product to be stored.

Such a drawback is far from marginal, considering that very frequently the same public establishment (such as for example a bar or a confectionery shop) sells both ice cream and confectionery products.

Such an establishment may be more active in selling ice cream in the summer season and confectionery products during the rest of the year. On the contrary, such an establishment may sell more confectionery products and sweets in the morning, and on the other hand it may sell more ice cream during the evening.

In view of the above, it is easy to understand how the owner of such a public establishment would be glad to have a refrigerated display counter capable of alternately operating to store/display ice cream and to store/display confectionery products and the like.

Moreover, it must be pointed out that in both the refrigerated display counters for confectionery products equipped with air cooling and in the refrigerated display counters for ice cream equipped with air cooling, the evaporators tend to frost and therefore a defrosting process needs to be carried out periodically.

In order to carry out such a defrosting process, the refrigeration systems provided with evaporators must have a complex flow reversal system to reverse the flow of the heat transfer fluid in order to heat and defrost the evaporator. The refrigeration systems equipped with such a flow reversal system are complex and extremely expensive.

IT RN20130014 describes an ice cream display counter with a conventional evaporator.

The purpose of the present invention is to overcome the drawbacks of the prior art by devising a refrigerated display counter that is versatile in the sense that it can be used in different modes for storing/displaying ice cream and confectionery products.

A further purpose of the present invention is to devise a refrigerated display counter that is simple and inexpensive to make.

These purposes are achieved in accordance with the invention with the features listed in the attached independent claim 1.

Advantageous embodiments appear from the dependent claims.

The refrigerated display counter according to the invention is defined by claim 1.

For explanatory clarity, the description of the refrigerated display counter according to the invention continues with reference to the attached drawings, which are for illustrative and non-limiting purposes only, wherein:
Fig. 1 is a diagrammatic longitudinal sectional view of a refrigerated display counter according to the invention; in said Fig. 1 the storage/display structure of the refrigerated display contains pans suitable for containing ice cream;
Fig. 2 is the same as Fig. 1 except for the fact that it is provided with a shelf for holding confectionery products and similar sweets that is disposed on the storage/display structure;
Fig. 3 is a diagram of two refrigeration systems of the refrigerated display counter according to the invention according to a first embodiment of the invention;
Fig. 4 is a diagram of two refrigeration systems of the refrigerated display counter according to the invention according to a second embodiment of the invention;
Figs. 5- 9 are diagrams illustrating the two refrigeration systems of Fig. 4, wherein the arrows indicate the path followed by the heat transfer fluids of the refrigeration systems according to different settings and operating modes of the refrigerated display counter according to the invention;
Fig. 10 is a diagrammatic view of an evaporator of the first refrigeration system of the refrigerated display counter according to the invention.

With reference to the attached figures, a refrigerated display counter according to the invention is described, which is comprehensively indicated with the reference numeral (100).

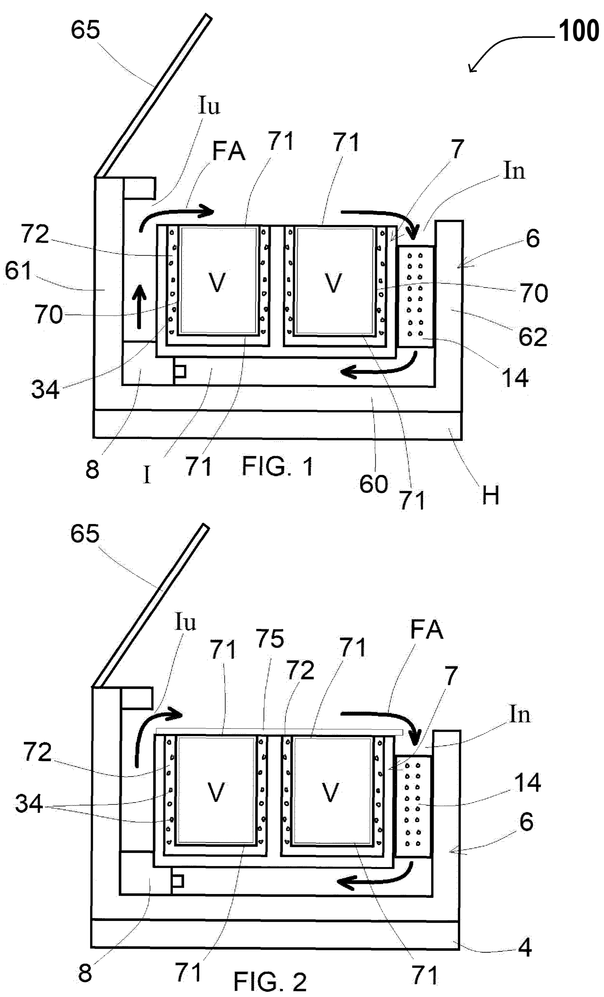

With reference to Figs. 1 and 2, the refrigerated display counter (100) comprises a base (H) suitable for resting on a floor.

The refrigerated display counter (100) also comprises an outer casing (6) supported by the base (H).

The outer casing (6) is in the form of a parallelepiped tub with a front wall (61), a back wall (62) and a bottom wall (60). The outer casing (6) is open at the top.

On the front wall (61) of the outer casing (6) there is a glass surface (65).

The refrigerated display counter (100) also comprises a storage/display structure (7) located inside the outer casing (6) so as to define a channel (I) between the outer casing (6) and the storage/display structure (7).

The channel (I) has an inlet (In) located at the back wall (62) of the outer casing (6) and an outlet (lu) located at the front wall (61) of the outer casing (6).

The storage/display structure (7) is suitable for holding food products that are visible during the sale.

The storage/display structure (7) comprises a plurality of refrigerated tubs (70) arranged side by side. Each refrigerated tub (70) comprises a housing (71) suitable for holding a pan (V) that contains confectionery products, and particularly ice cream. The pans (V) can be inserted and removed in/from the housings (71) of the refrigerated tubs (70).

The storage/display structure (7) comprises one or more cavities (72) that are filled with glycol and surround the refrigerated tubs (70).

The refrigerated counter (100) may also comprise a shelf (75) that is suitable for being disposed on the storage/display structure (7) as needed and for storing confectionery products, such as pastry or cakes. Additional shelves suitable for storing confectionery products, pastry or cakes may be disposed on the shelf (75).

The shelf (75) or shelves can be mounted and removed on/from the storage/display structure (7).

If the refrigerated display counter (100) is to be used for displaying ice cream, the shelf (75) or shelves are removed and the pans (V) containing ice cream or the like are inserted in the housings (71) of the refrigerated tubs (70) of the storage/display structure (7).

If the refrigerated display counter (100) is to be used for storing and displaying pastry or similar confectionery products, the shelf (75) or shelves must be mounted on the storage/display structure (7).

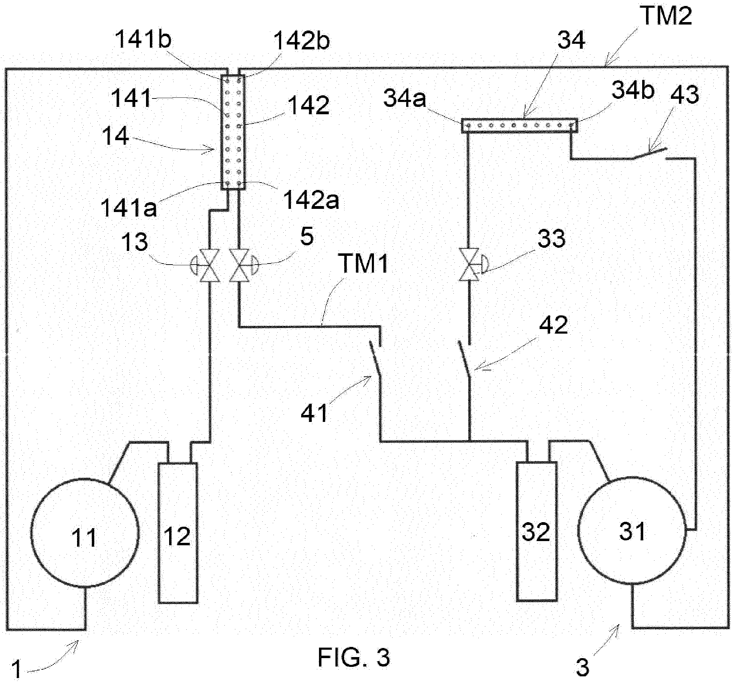

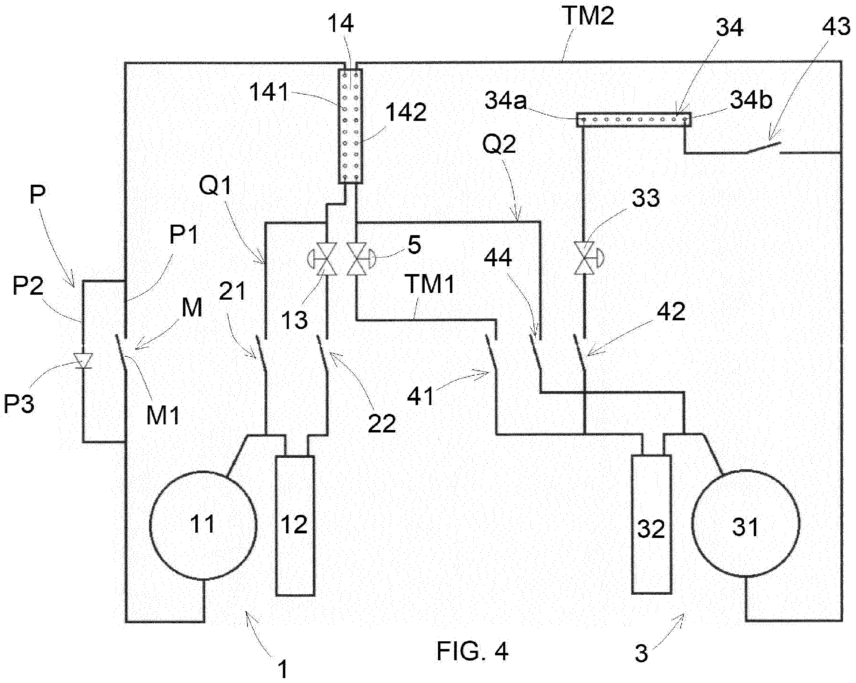

With reference to Fig. 3 and 4, the refrigerated display counter (100) comprises a first refrigeration system (1) with a circulation of a first heat transfer fluid (f1).

The first refrigeration system (1) comprises a compressor (11), a condenser (12), a thermal expansion valve (13) and an evaporator (14) positioned in the channel (I) (see Figs. 1 and 2) defined by the storage/display structure (7) and by the outer casing (6). The thermal expansion valve (13) is interposed between the condenser (12) and the evaporator (14). The elements of the first refrigeration system (1) are connected to each other by ducts that generate a closed circuit. The operation of the first refrigeration system (1) is known to a technician of the field and therefore a detailed description of the physical phenomena occurring in the heat transfer fluid as it flows along the components (11, 12, 13, 14) of the first refrigeration system (1) is omitted.

Going back to Figs. 1 and 2, the refrigerated display counter (100) comprises one or more fans (8) arranged in the channel (I) to generate an airflow (FA) that enters the inlet (In) of the channel (I), passes through the evaporator (14) to cool, and exits the outlet (lu) of the channel (I) in such a way to lap an upper surface of the products disposed on the storage/display structure (7).

The airflow (FA) is diagrammatically shown with arrows in Fig. 1 and Fig. 2.

The airflow (FA) can lap both the upper surface of the confectionery products or the like disposed onto the shelf (75) and the upper surface of the ice cream contained in the pans (V) arranged in the housings (71) of the refrigerated tubs (70) of the storage/display structure (7).

Referring to Figs. 3 and 4, the refrigerated display counter (100) comprises a second refrigeration system (3) with a circulation of a second heat transfer fluid (f3). The second refrigeration system (3) comprises a compressor (31), a condenser (32), a thermal expansion valve (33), and a coil (34) placed in the cavity (72) to cool the glycol (see Figs. 1 and 2). The thermal expansion valve (33) is interposed between the condenser (32) and the coil (34) positioned in the cavity (72). The elements of the second refrigeration system (3) are connected to each other by ducts that generate a closed circuit. The operation of the second refrigeration system (3) is known to a technician of the field, and therefore a detailed description of the physical phenomena occurring in the heat transfer fluid as it flows along the components (31, 32, 33, 34) of the second refrigeration system (3) is omitted.

The coil (34) comprises an inlet (34a) hydraulically connected to the thermal expansion valve (33) and an outlet (34b) hydraulically connected to the compressor (31).

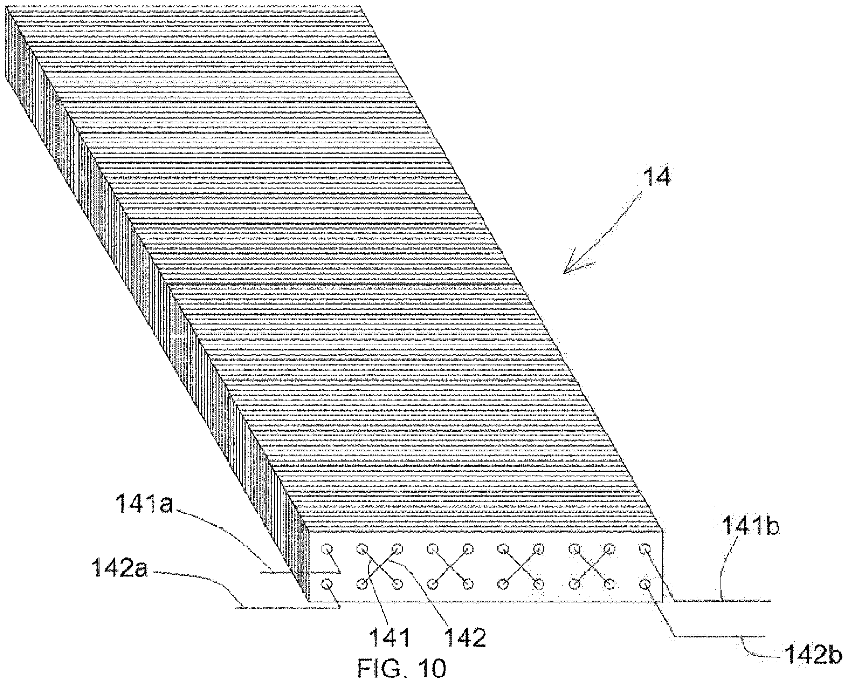

Referring to Figs. 3 and 10, the evaporator (14) of the first refrigeration system (1) is an evaporator (14) with dual coil, i.e. a first coil (141) connected to the first refrigeration system (1) and suitable for being crossed by the first heat transfer fluid (f1), and a second coil (142) connected to the second refrigeration system (3) and suitable for being crossed by the second heat transfer fluid (f3).

The first coil (141) comprises an inlet (141a) connected to the thermal expansion valve (13) and an outlet (141b) connected to the compressor (11) of the first refrigeration system (1). The second coil (142) comprises an inlet (142a) and an outlet (142b).

With reference to Figg. 10, the evaporator (14) is a finned evaporator comprising parallel fins in addition to the coils (141, 142) to generate a plurality of cavities between which the airflow (FA) generated by the fan (8) passes.

Referring to Figs. 3 and 4, the refrigerated display counter (100) comprises:
- a supply duct (TM1) that hydraulically connects the condenser (32) of the second refrigeration system (3) and the second coil (142) of the evaporator (14) of the first refrigeration system (1); specifically, the supply duct (TM1) hydraulically connects the condenser (32) of the second refrigeration system (3) to the inlet (142a) of the second coil (142) of the evaporator (14) of the first refrigeration system (1);
- a return duct (TM2) that hydraulically connects the second coil (142) of the evaporator (14) of the first refrigeration system (1) and the compressor (31) of the second refrigeration system (3); specifically, the return duct (TM2) hydraulically connects the outlet (142b) of the second coil (142) of the evaporator (14) to the compressor (31) of the second refrigeration system (3);

- a thermal expansion valve (5) disposed in the supply duct (TM1); and
- a selection valve assembly (41, 42, 43) configured to alternately permit the passage of the second heat transfer fluid (f3) into the second coil (142) of the evaporator (14) or into the coil (34) of the second refrigeration system (3) located in the cavity (72).

The selection valve assembly (41, 42, 43) comprises:
- a first valve (41) arranged in the supply duct (TM1) and configured to be disposed in an opening position, wherein it permits the passage of the second heat transfer fluid (f3) to the second coil (142), and in a closed position, wherein it prevents the passage of the second heat transfer fluid (f3) to the second coil (142);
- a second valve (42) arranged upstream of the inlet (34a) of the coil (34) and configured to be disposed in an open position, wherein it permits the passage of the second heat transfer fluid (f3) to the coil (34), and in a closed position, wherein it prevents the passage of the second heat transfer fluid (f3) to the coil (34); and
- a third valve (43) arranged downstream of the coil (34) and configured to be disposed in an open position that permits the passage of the second heat transfer fluid (f3), and in a closing position, wherein it prevents the passage of the second heat transfer fluid (f3).

With reference to Fig. 4, the applicant has also devised a solution in order to defrost the first coil (141) of the evaporator (14) and the second coil (142) of the evaporator (14) without having to adopt complex flow reversal systems to reverse the flow of the heat transfer fluids (f1, f3).

Specifically, in order to defrost the first coil (141) of the evaporator (14), the refrigerated display counter (100) comprises:
- a first bypass conduit (Q1) that hydraulically connects the compressor (11) of the first refrigeration system (1) to the first coil (141) of the evaporator (14), bypassing the condenser (12) and the thermal expansion valve (13) of the first refrigeration system (1); and
- a first valve assembly (21, 22) configured to permit the passage of the first heat transfer fluid (f1) into the first bypass conduit (Q1) or into the condenser (12) and into the thermal expansion valve (13) of the first refrigeration system (1).

The first valve assembly (21, 22) comprises:
- a first valve (21) arranged in the first bypass conduit (Q1) and configured in such a way that it can be alternately disposed in an open position, wherein it permits the passage of the first heat transfer fluid (f1) into the first bypass conduit (Q1), and in a closed position, wherein it prevents the passage of the first heat transfer fluid (f1) into the first bypass conduit (Q1); and
- a second valve (22) configured in such a way that it can be alternately disposed in an open position, wherein it permits the passage of the first heat transfer fluid (f1) into the condenser (12) and into the thermal expansion valve (13) of the first refrigeration system (1), and in a closed position, wherein it prevents the passage of the first heat transfer fluid (f1) into the condenser (12) and into the thermal expansion valve (13) of the first refrigeration system (1).

In order to defrost the second coil (142) of the evaporator (14), the refrigerated display counter (100) comprises:
- a second bypass duct (Q2) that hydraulically connects the compressor (31) of the second refrigeration system (3) to the second coil (142) of the evaporator (14) of the first refrigeration system (1), bypassing the condenser (32) of the second refrigeration system (3) and the thermal expansion valve (5) arranged in the supply duct (TM1); and
- a second valve assembly (41, 44) configured to permit the passage of the second heat transfer fluid (f3) into the second bypass duct (Q2) or the condenser (32) of the second refrigeration system (C2) and the thermal expansion valve (5) arranged in the supply duct (TM1).

The second valve assembly (41, 44) comprises:
- a first valve (41) arranged in the supply duct (TM1) and configured to be alternately disposed in an open position, wherein it permits the passage of the second heat transfer fluid (f3) into the second coil (142) passing through the condenser (32) of the second refrigeration system (3) and the expansion valve thermal expansion valve (5) arranged in the supply duct (TM1), and in a closing position, wherein it prevents the passage of the second heat transfer fluid (f3) into the second coil (142) passing through the condenser (32) of the second refrigeration system (3) and the thermal expansion valve (5) disposed in the supply duct (TM1);
- a second valve (44) arranged in the second bypass duct (Q2) and configured in such a way to be alternately disposed in an opening position, wherein it permits the passage of the second heat transfer fluid (f3) into the second bypass duct (Q2), and in a closing position, wherein it prevents the passage of the second heat transfer fluid (f3) into the second bypass duct (Q2).

The first valve (41) of the second valve assembly (41, 44) and the first valve (41) of the selection valve assembly (41, 42, 43) coincide.

Again with reference to Fig. 4, preferably, the first refrigeration system (1) comprises a pressure regulation system (P) configured to regulate the pressure (P) of the first heat transfer fluid (f1).

The pressure regulation system (P) is interposed between the first coil (141) of the evaporator (14) and the compressor (11) of the first refrigeration system (1).

The pressure regulation system (P) comprises:
- a first duct (P1) and a second duct (P2) in parallel position;
- a pressure regulation valve (P3) arranged in the second duct (P2); and
- selection means (M) (namely, a valve (M1) arranged in the first duct (P1)) suitable for permitting the passage of the first heat transfer fluid (f1) into the first duct (P1) or into the second duct (P2).

Preferably, the valves (41, 42, 43, 44, 21, 22, M1) of the selection valve assembly, of the first valve assembly, of the second valve assembly and of the selection means are solenoid valves.

Preferably, the lamination elements (13, 33, 5) consist of thermostatic lamination valves.

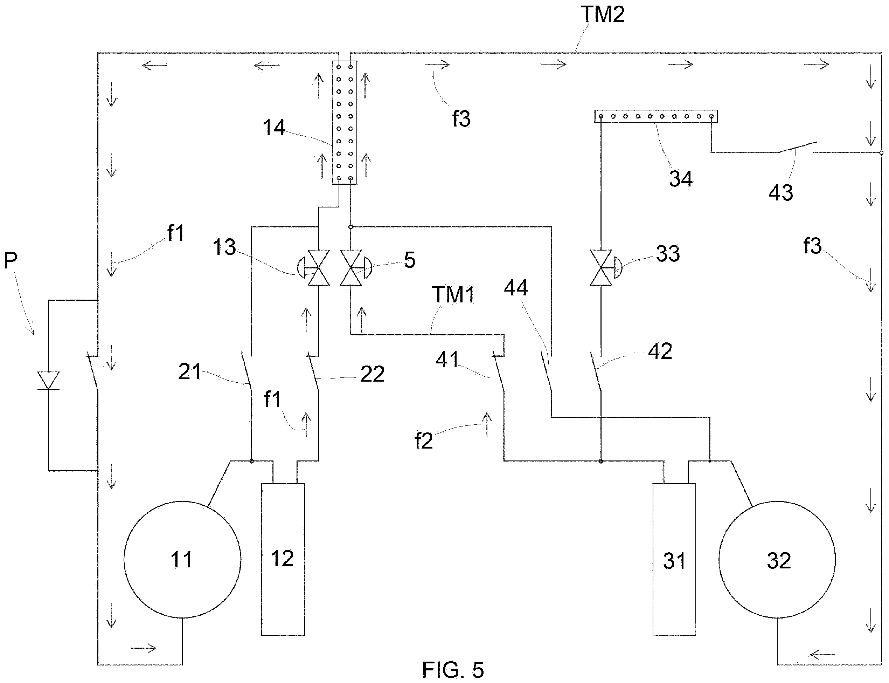

Hereinafter, with reference to Figs. 5-9, five different operating modes of the refrigerated display counter (100) according to the invention are described.

### ICE CREAM DISPLAY MODE

With reference to Fig. 5, if the ice cream contained in the pans (V) disposed in the refrigerated tubs (70) is to be displayed, the compressors (11, 31) of the two refrigeration systems (1, 3) are activated and the first valve assembly (21, 22), the second valve assembly (41, 44) and the selection valve assembly (41, 42, 43) are set in such a way that:
- the first heat transfer fluid (f1) circulates cyclically in the compressor (11) of the first refrigeration system (1), in the condenser (12) of the first refrigeration system (1), in the thermal expansion valve (13) of the first refrigeration system (1), and in the first coil (141) of the evaporator (14); and
- the second heat transfer fluid (f3) circulates cyclically in the compressor (31) of the second refrigeration system (3), in the condenser (32) of the second refrigeration system (3), in the thermal expansion valve (5) disposed in the supply duct (TM1), and in the second coil (142) of the evaporator (14).

In this way, since both coils (141, 142) of the evaporator (14) are crossed by cold heat transfer fluids (f1, f3), an optimal cooling of the evaporator (14) is achieved.

### PASTRY DISPLAY MODE

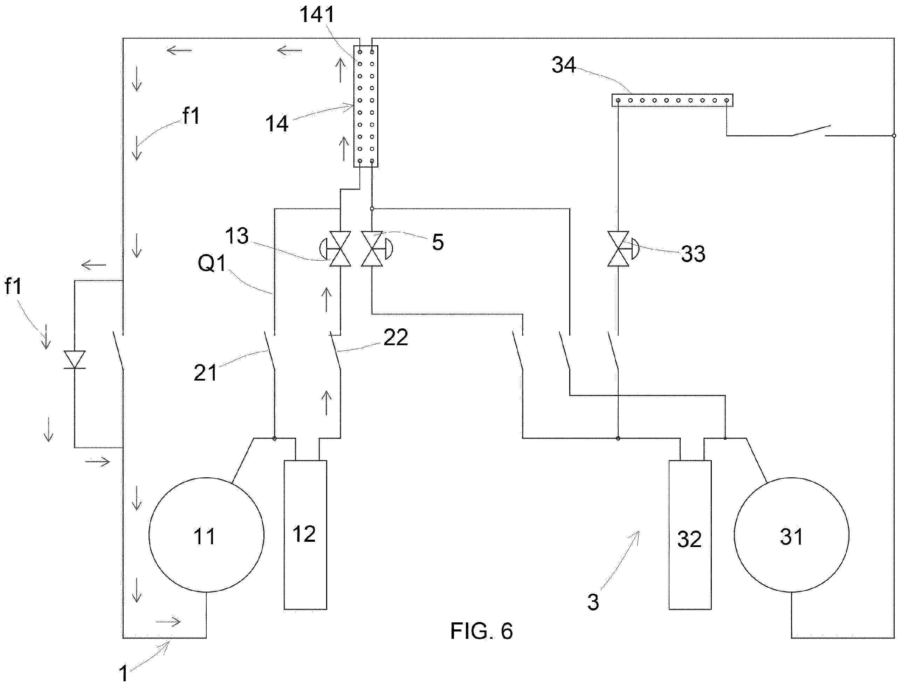

With reference to Fig. 6, if pastry products or the like are to be displayed on the shelf (75), in such a case the storage temperature must be higher than the storage temperature for the ice cream.

In such a case, the compressor (31) of the second refrigeration system (3) is turned off so that the second refrigeration system (3) is inactive.

With regard to the first refrigeration system (1), instead, the first valve assembly (21, 22) is set in such a way that the first heat transfer fluid (f1) circulates cyclically in the compressor (11) of the first refrigeration system (1), in the condenser (12) of the first refrigeration system (1), in the thermal expansion valve (13) of the first refrigeration system (1), and in the first coil (141) of the evaporator (14). Given that only one of the two coils of the evaporator (14) is cooled. there will be a lower cooling of the evaporator (14), resulting in a higher storage temperature suitable for storing and cooling the confectionery products disposed on the shelf (75).

If such a provision is not sufficient and the temperature of the evaporator (14) is still low, the pressure regulation valve (P3) can be operated by setting the selection means (M) in such a way to let the first heat transfer fluid (f1) pass into the second duct (P2) where the pressure regulation valve (P3) is located.

By adjusting the pressure of the first heat transfer fluid (f1), the temperature of the evaporator (14) and consequently the storage temperature of the confectionery products can be adjusted.

### ICE CREAM STORAGE MODE

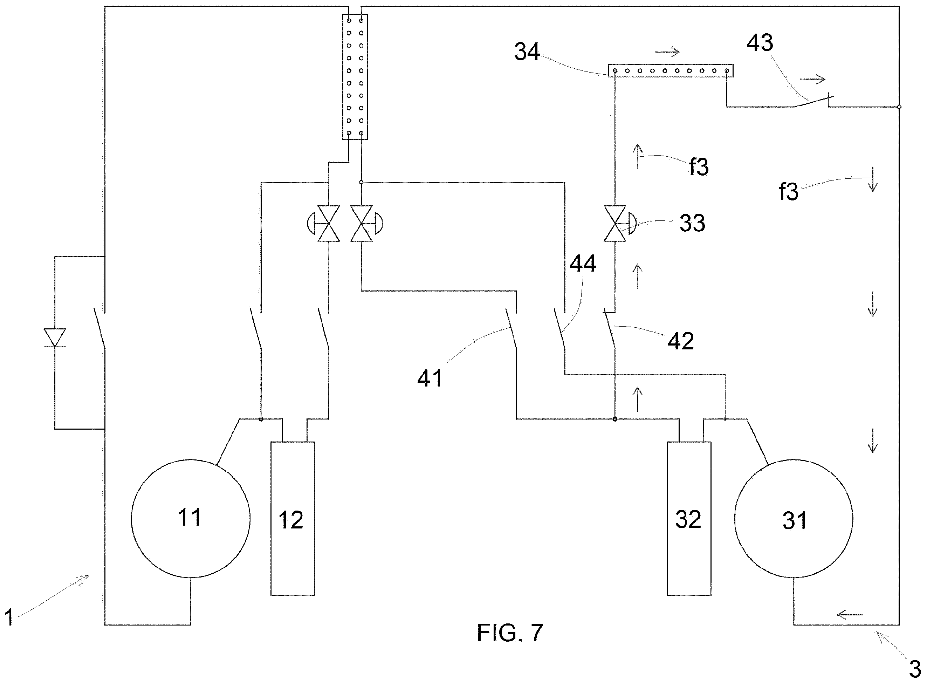

With reference to Fig. 7, during the night hours when the ice cream does not need to be displayed, the refrigerated display counter can be used only to store the ice cream.

In such a case, the compressor (11) of the first refrigeration system (1) is turned off so that the first refrigeration system (1) is inactive.

With regard to the second refrigeration system (3), instead, the second valve assembly (41, 44) and the selection valve assembly (41, 42, 43) are set in such a way that the second heat transfer fluid (f3) circulates cyclically in the compressor (31) of the second refrigeration system (3), in the condenser (32) of the second refrigeration system (3), in the thermal expansion valve (33) of the second refrigeration system (3) and in the coil (34) immersed in the glycol so that the glycol is cooled and consequently cools and stores the ice cream contained in the pans (V) located in the housings (71) of the refrigerated tubs (70) of the storage/display structure (7).

Obviously, in such a case, the fan (8) can be deactivated because the evaporator (14) is not cooled.

### PASTRY DISPLAY AND ICE CREAM STORAGE MODE

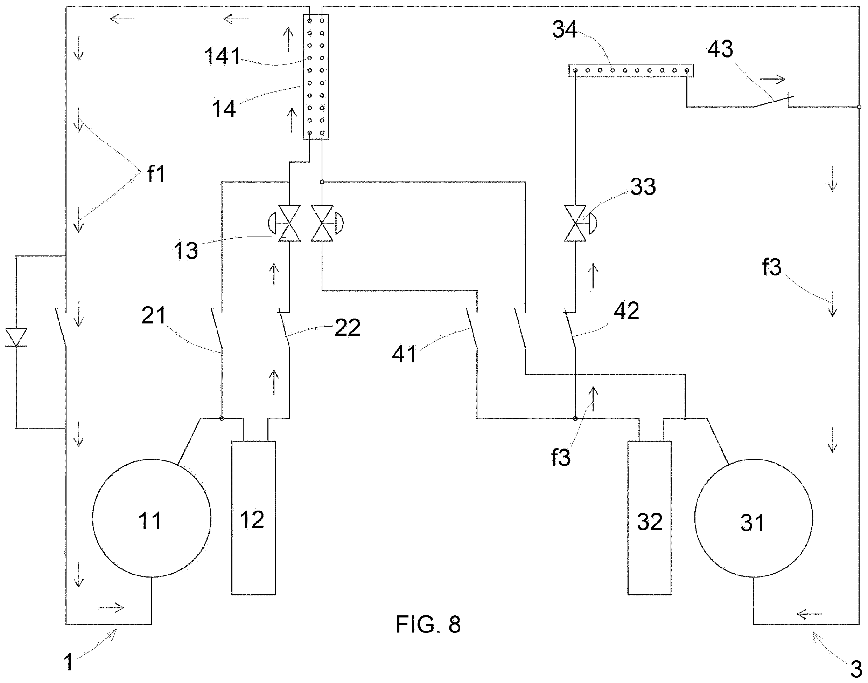

With reference to Fig. 8, if pastry products or the like disposed on the shelf (75) are to be displayed and at the same time the ice cream contained in the pans (V) arranged in the housings (71) of the refrigerated tubs (70) of the storage/display structure (7) is to be stored, in such a case it is provided that:
- the first heat transfer fluid (f1) circulates cyclically in the compressor (11) of the first refrigeration system (1), in the condenser (12) of the first refrigeration system (1), in the thermal expansion valve (13) of the first refrigeration system (1), and in the first coil (141) of the evaporator (14); and
- the second heat transfer fluid (f3) circulates cyclically in the compressor (31) of the second refrigeration system (3), in the condenser (32) of the second refrigeration system (3), in the thermal expansion valve (33) of the second refrigeration system (3), and in the coil (34) immersed in glycol.

### DEFROST MODE

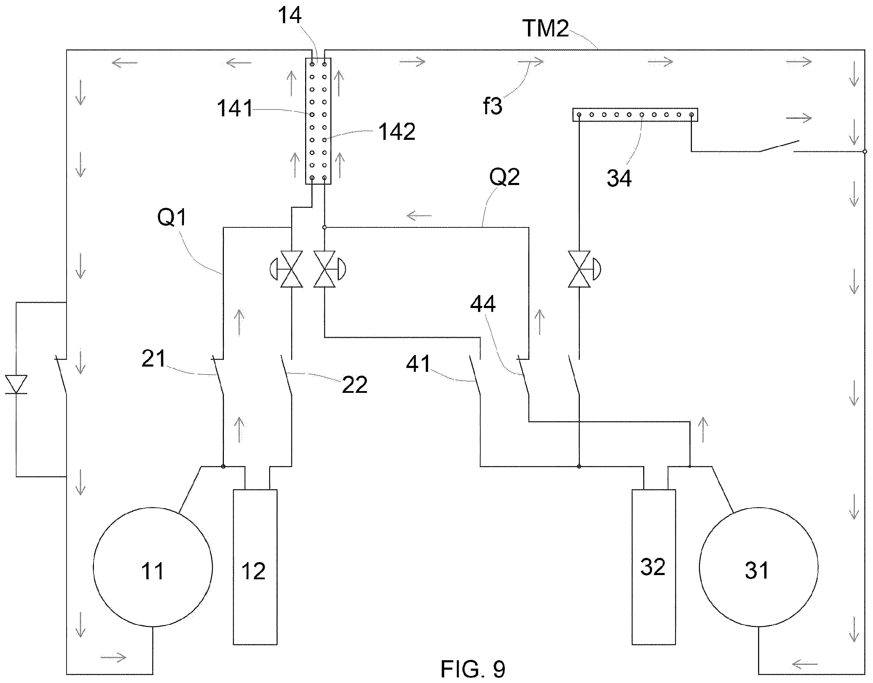

With reference to Fig. 9, in the ice cream display mode (shown in Fig. 5), during the pastry display mode (shown in Fig. 6), and during the pastry display and ice cream storage mode (shown in Fig. 8), i.e., in all the operating modes in which the evaporator (14) is cooled, the evaporator (14) is frosted and therefore needs to be defrosted.

In order to defrost the evaporator (14), the two compressors (11, 31) must be turned on to let the two heat transfer fluids (f1, f3) circulate.

Then, the first valve assembly (21, 22), the second valve assembly (41, 44) and the selection valve assembly (41, 42, 43) are set in such a way that:
- the first heat transfer fluid (f1) flows cyclically in the compressor (11) of the first refrigeration system (1), in the first bypass conduit (Q1) and in the first coil (141); and
- the second heat transfer fluid (f3) flows cyclically in the compressor (31) of the second refrigeration system (3), in the second bypass duct (Q2), in the second coil (42) and in the return duct (TM2).

Obviously, since the two heat transfer fluids (f1, f3) do not pass through the respective condensers and lamination elements, they are hot and therefore they can defrost the coils (141, 142) of the evaporator (14).

The second valve (42) and the third valve (43) of the selection valve assembly (41, 42, 43) are kept open to prevent the hot heat transfer fluid from flowing into the coil (34) located in the glycol-filled cavity (72).

As a result of the above description, it now appears evident that the evaporator (14) equipped with the two separate coils (141, 142) in which the first heat transfer fluid (f1) of the first refrigeration system (1) and the second heat transfer fluid (f3) of the second refrigeration system (3) flow, respectively, makes it possible to have an extremely versatile refrigerated display counter that can operate in different modes according to the specific requirements.

In addition, it is worth reiterating that the provision of the bypass conduits (Q1, Q2) and of the valve assemblies makes it possible to quickly defrost the evaporator (14) without having to adopt any system to reverse the flow of the heat transfer fluid.

Finally, it must be pointed out that energy consumption is significantly reduced compared with the traditional refrigerated display counters with mixed cooling system because the two compressors and the new dual coil evaporator allow for a proper balanced dimensioning of the compressor motors. In addition, the new refrigerated display counter uses Propane Gas R290 as heat transfer liquid, thus meeting the requirements of the new European standard EN IEC60335-2-89:2022.

Numerous variations and modifications may be made to the present embodiment of the invention, within the scope of an expert of the field, while still falling within the scope of the invention as expressed by the appended claims.

## Claims

1. Refrigerated display counter (100) comprising:
- an outer casing (6);
- a storage/display structure (7) arranged inside the outer casing (6) in such a manner as to define a channel (I) between the outer casing (6) and the storage/display structure (7); wherein said storage/display structure (7) comprises at least one cavity (72) filled with glycol; wherein said storage/display structure (7) is suitable for holding food products intended to remain visible during the sale;
- a first refrigeration system (1) wherein a first heat transfer fluid (f1) circulates; the first refrigeration system (1) comprises a compressor (11), a condenser (12), a thermal expansion valve (13) and an evaporator (14) positioned in the channel (I);
- at least one fan (8) arranged in said channel (I) to generate an airflow (FA) that enters the channel (I) from an inlet (In) of the channel (I), passes through the evaporator (14) to be cooled, and exits from an outlet (Iu) of the channel (I) so as to lap an upper surface of the products arranged in the storage/display structure (7);
- a second refrigeration system (3) wherein a second heat transfer fluid (f3) circulates; said second refrigeration system (3) comprises a compressor (31), a condenser (32), a thermal expansion valve (33) and a coil (34) arranged in the cavity (72) in order to cool the glycol;
**characterized by** the fact that
said evaporator (14) of the first refrigeration system (1) is a dual coil evaporator (14) having a first coil (141) connected to the first refrigeration system (1) and suitable for being crossed by the first heat transfer fluid (f1), and a second coil (142) connected to the second refrigeration system (3) and suitable for being crossed by the second heat transfer fluid (f3);
wherein said refrigeration display counter (100) comprises:
- a supply duct (TM1) hydraulically connecting the condenser (32) of the second refrigeration system (3) and the second coil (142) of the evaporator (14);
- a return duct (TM2) hydraulically connecting the second coil (142) of the evaporator (14) and the compressor (31) of the second refrigeration system (3);
- a thermal expansion valve (5) arranged in said supply duct (TM1);
- a selection valve assembly (41, 42, 43) configured to alternately permit the passage of the second heat transfer fluid (f3) in the second coil (142) of the evaporator (14) or in the coil (34) of the second refrigeration system (3) arranged in the cavity (72).

2. The refrigerated display counter (100) according to claim 1, comprising:
- a first bypass conduit (Q1) hydraulically connecting the compressor (11) of the first refrigeration system (1) to the first coil (141) of the evaporator (14), bypassing the condenser (12) and the thermal expansion valve (13) of the first refrigeration system (1); and
- a first valve assembly (21, 22) configured to permit the passage of the first heat transfer fluid (f1) in the first bypass conduit (Q1) or in the condenser (12) and in the thermal expansion valve (13) of the first refrigeration system (1).

3. The refrigerated display counter (100) according to claim 1 or 2, comprising:
- a second bypass conduit (Q2) hydraulically connecting the compressor (31) of the second refrigeration system (3) to the second coil (142) of the evaporator (14), bypassing the condenser (32) of the second refrigeration system (3) and the thermal expansion valve (5) arranged in the supply duct (TM1); and
- a second valve assembly (41, 44) configured to permit the passage of the second heat transfer fluid (f3) in the second bypass conduit (Q2) or in the condenser (32) of the second refrigeration system (C2) and in the thermal expansion valve (5) arranged in the supply duct (TM1).

4. The refrigerated display counter (100) according to claim 1 or 2, wherein said first refrigeration system (1) comprises a pressure regulation system (P) configured to regulate the pressure (P) of the first heat transfer fluid (f1).

5. The refrigerated display counter (100) according to claim 4, wherein said pressure regulation system (P) comprises:
- a first duct (P1) and a second duct (P2) arranged in parallel position;
- a pressure regulation valve (P3) arranged in the second duct (P2); and
- selection means (M) suitable for permitting the passage of the first heat transfer fluid (f1) in the first duct (P1) or in the second duct (P2).

6. The refrigerated display counter (100) according to any one of the preceding claims, wherein said storage/display structure (7) comprises a plurality of refrigerated tubs (70) disposed side-by-side; each refrigerated tub (70) having a housing (71) suitable for holding a pan (V) of confectionery products; wherein said storage/display structure (7) comprises one or more cavities (72) filled with glycol that surround the refrigerated tubs (70).

7. The refrigerated display counter (100) according to any one of the preceding claims, comprising at least one shelf (75) that is removably mounted onto the storage/display structure (7) and is suitable for holding confectionery products.

8. The refrigerated display counter (100) according to any one of the preceding claims, wherein said evaporator (14) is a finned evaporator comprising parallel fins that generate a plurality of cavities for the passage of the airflow (FA) generated by the fan (8).

## Patentansprüche

1. Warenkühltheke (100), umfassend:
- ein Außengehäuse (6);
- eine Aufbewahrungs-/Ausstellungsstruktur (7), die im Inneren des Außengehäuses (6) so untergebracht ist, dass ein Kanal (I) zwischen dem Außengehäuse (6) und der Aufbewahrungs-/Ausstellungsstruktur (7) definiert ist; wobei die Aufbewahrungs-/Ausstellungsstruktur (7) mindestens einen Hohlraum (72) umfasst, der mit Glykol gefüllt ist; wobei die Aufbewahrungs-/Ausstellungsstruktur (7) dazu geeignet ist, Lebensmittel aufzunehmen, die dazu bestimmt sind, während des Verkaufs sichtbar zu bleiben;
- ein erstes Kühlsystem (1), in dem ein erstes Wärmeübertragungsfluid (f1) zirkuliert; das erste Kühlsystem (1) umfasst einen Kompressor (11), einen Kondensator (12), ein thermostatisches Expansionsventil (13) und einen Verdampfer (14), der in dem Kanal (I) angeordnet ist;
- mindestens ein Gebläse (8), das in dem Kanal (I) angeordnet ist, um einen Luftstrom (FA) zu erzeugen, der aus einer Einlassöffnung (In) des Kanals (I) in den Kanal (I) einströmt, den Verdampfer (14) passiert, um gekühlt zu werden, und aus einer Auslassöffnung (Iu) des Kanals (I) ausströmt, um eine obere Oberfläche der in der Aufbewahrungs-/Ausstellungsstruktur (7) angeordneten Produkte anzuströmen;
- ein zweites Kühlsystem (3), in dem ein zweites Wärmeübertragungsfluid (f3) zirkuliert; das zweite Kühlsystem (3) umfasst einen Kompressor (31), einen Kondensator (32), ein thermostatisches Expansionsventil (33) und eine Schlange (34), die in dem Hohlraum (72) angeordnet ist, um das Glykol zu kühlen;
**dadurch gekennzeichnet, dass**
der Verdampfer (14) des ersten Kühlsystems (1) ein Doppelschlangenverdampfer (14) ist, mit einer ersten Schlange (141), die mit dem ersten Kühlsystem (1) verbunden ist und dazu bestimmt ist, von dem ersten Wärmeübertragungsfluid (f1) durchströmt zu werden, und einer zweiten Schlange (142), die mit dem zweiten Kühlsystem (3) verbunden ist und dazu bestimmt ist, von dem zweiten Wärmeübertragungsfluid (f3) durchströmt zu werden;
wobei die Warenkühltheke (100) umfasst:
- eine Förderleitung (TM1), die den Kondensator (32) des zweiten Kühlsystems (3) und die zweite Schlange (142) des Verdampfers (14) hydraulisch verbindet;
- eine Rücklaufleitung (TM2), die die zweite Schlange (142) des Verdampfers (14) und den Kompressor (31) des zweiten Kühlsystems (3) verbindet;
- ein thermostatisches Expansionsventil (5), das in der Förderleitung (TM1) angeordnet ist;
- ein Auswahlventilanordnung (41, 42, 43), die so konfiguriert ist, dass wahlweise die Passage des zweiten Wärmeübertragungsfluids (f3) in der zweiten Schlange (142) des Verdampfers (14) oder in der Schlange (34) des zweiten Kühlsystems (3) aktiviert wird, die in dem Hohlraum (72) angeordnet ist.

2. Warenkühltheke (100) nach Anspruch 1, umfassend:
- eine erste Umgehungsleitung (Q1), die den Kompressor (11) des ersten Kühlsystems (1) mit der ersten Schlange (141) des Verdampfers (14) unter Umgehung des Kondensators (12) und des thermostatischen Expansionsventils (13) des ersten Kühlsystems (1) verbindet; und
- eine erste Ventilanordnung (21, 22), die so konfiguriert ist, dass die Passage des ersten Wärmeübertragungsfluids (f1) in der ersten Umgehungsleitung (Q1) oder im Kondensator (12) und im thermostatischen Expansionsventil (13) des ersten Kühlsystems (1) aktiviert wird.

3. Warenkühltheke (100) nach Anspruch 1 oder 2, umfassend:
- eine zweite Umgehungsleitung (Q2), die den Kompressor (31) des zweiten Kühlsystems (3) mit der zweiten Schlange (142) des Verdampfers (14) unter Umgehung des Kondensators (32) und des zweiten Kühlsystems (3) und des thermostatischen Expansionsventils (5) verbindet, das in der Förderleitung (TM1) angeordnet ist; und
- eine zweite Ventilanordnung (41, 44), die so konfiguriert ist, dass die Passage des zweiten Wärmeübertragungsfluids (f3) in der zweiten Umgehungsleitung (Q2) oder im Kondensator (32) des zweiten Kühlsystems (C2) und im thermostatischen Expansionsventil (5) aktiviert wird, das in der Förderleitung (TM1) angeordnet ist.

4. Warenkühltheke (100) nach Anspruch 1 oder 2, wobei das erste Kühlsystem (1) ein Druckregulierungssystem (P) umfasst, das konfiguriert ist, um den Druck (P) des ersten Wärmeübertragungsfluids (f1) zu regulieren.

5. Warenkühltheke (100) nach Anspruch 4, wobei das Druckregulierungssystem (P) umfasst:
- eine erste Leitung (P1) und eine zweite Leitung (P2), die parallel zueinander angeordnet sind;
- ein Druckregulierungsventil (P3), das in der zweiten Leitung (P2) angeordnet ist; und
- Auswahlmittel (M), die dazu geeignet sind, die Passage des ersten Wärmeübertragungsfluids (f1) in der ersten Leitung (P1) oder in der zweiten Leitung (P2) zu aktivieren.

6. Warenkühltheke (100) nach einem der vorstehenden Ansprüche, wobei die Aufbewahrungs-/Ausstellungsstruktur (7) eine Vielzahl von gekühlten Tanks (70) umfasst, die nebeneinander angeordnet sind; jeder gekühlte Tank (70) weist einen Sitz (71) auf, der dazu geeignet ist, eine Schale (V) zur Aufnahme von Süßwaren aufzunehmen; wobei die Aufbewahrungs-/Ausstellungsstruktur (7) einen oder mehrere mit Glykol gefüllte Hohlräume (72) umfasst, die die gekühlten Tanks (70) umgeben.

7. Warenkühltheke (100) nach einem der vorstehenden Ansprüche, umfassend mindestens eine Auflagefläche (75), die auf abnehmbare Weise auf der Aufbewahrungs-/Ausstellungsstruktur (7) montiert ist und dazu bestimmt ist, die Süßwaren zu tragen.

8. Warenkühltheke (100) nach einem der vorstehenden Ansprüche, wobei der Verdampfer (14) ein Rippenverdampfer ist, der parallel zueinander angeordnete Rippen umfasst, die eine Vielzahl von Hohlräumen für die Passage des vom Gebläse (8) erzeugten Luftstroms (FA) erzeugen.

## Revendications

1. Présentoir réfrigéré (100) comprenant :
- un boîtier extérieur (6) ;
- une structure de conservation/exposition (7) placée à l'intérieur du boîtier extérieur (6) de manière à définir un canal (I) entre le boîtier extérieur (6) et la structure de conservation/exposition (7) ; où ladite structure de conservation/exposition (7) comprend au moins une cavité (72) qui est remplie de glycol ; où ladite structure de conservation/exposition (7) est destinée à soutenir des produits alimentaires, destinés à être présentés visuellement pendant la vente ;
- un premier système de réfrigération (1) dans lequel circule un premier fluide caloporteur (f1) ; le premier système de réfrigération (1) comprend un compresseur (11), un condenseur (12), une soupape thermostatique (13) et un évaporateur (14) positionné dans le canal (I) ;
- au moins un ventilateur (8) disposé dans ledit canal (I) pour générer un flux d'air (FA) qui entre dans le canal (I) via une embouchure d'entrée (In) du canal (I), passe par l'évaporateur (14) pour se refroidir et sort via une embouchure de sortie (lu) du canal (I) de manière à effleurer une surface supérieure des produits disposés sur la structure de conservation/exposition (7) ;
- un second système de réfrigération (3) dans lequel circule un second fluide caloporteur (f3) ; ledit second système de réfrigération (3) comprend un compresseur (31), un condenseur (32), une soupape thermostatique (33) et un serpentin (34) positionné dans la cavité (72) pour refroidir le glycol ;
**caractérisé en ce que**
ledit évaporateur (14) du premier système réfrigérant (1) est un évaporateur (14) à double serpentin ayant un premier serpentin (141) qui est relié au premier système réfrigérant (1) et qui est destiné à être traversé par le premier fluide caloporteur (f1) et un second serpentin (142) qui est relié au second système réfrigérant (3) et qui est destiné à être traversé par le second fluide caloporteur (f3) ;
où ledit présentoir réfrigéré (100) comprend :
- un conduit d'alimentation (TM1) qui connecte hydrauliquement le condenseur (32) du second système réfrigérant (3) et le second serpentin (142) de l'évaporateur (14) ;
- un conduit de retour (TM2) qui connecte hydrauliquement le second serpentin (142) de l'évaporateur (14) et le compresseur (31) du second système réfrigérant (3) ;
- une soupape thermostatique (5) disposée dans ledit conduit d'alimentation (TM1) ;
- un groupe de soupapes de sélection (41, 42, 43) configuré de manière à activer alternativement le passage du second fluide caloporteur (f3) dans le second serpentin (142) de l'évaporateur (14) ou dans le serpentin (34) du second système réfrigérant (3) positionné dans la cavité (72).

2. Présentoir réfrigéré (100) selon la revendication 1, comprenant :
- un premier conduit de dérivation (Q1) qui connecte hydrauliquement le compresseur (11) du premier système réfrigérant (1) au premier serpentin (141) de l'évaporateur (14) en bypassant le condenseur (12) et la soupape thermostatique (13) du premier système réfrigérant (1) ; et
- un premier groupe de soupapes (21, 22) configuré de manière à activer le passage du premier fluide caloporteur (f1) dans le premier conduit de dérivation (Q1) ou dans le condenseur (12) et dans la soupape thermostatique (13) du premier système réfrigérant (1).

3. Présentoir réfrigéré (100) selon la revendication 1 ou 2, comprenant ;
- un second conduit de dérivation (Q2) qui connecte hydrauliquement le compresseur (31) du second système réfrigérant (3) au second serpentin (142) de l'évaporateur (14) en bypassant le condenseur (32) du second système réfrigérant (3) et la soupape thermostatique (5) disposée dans le conduit d'alimentation (TM1) ; et
- un second groupe de soupapes (41, 44) configuré de manière à activer le passage du second fluide caloporteur (f3) dans le second conduit de dérivation (Q2) ou dans le condenseur (32) du second système réfrigérant (C2) et dans la soupape thermostatique (5) disposée dans le conduit d'alimentation (TM1).

4. Présentoir réfrigéré (100) selon la revendication 1 ou 2, où ledit premier système réfrigérant (1) comprend un système de réglage de la pression (P) configuré de manière à régler la pression (P) du premier fluide caloporteur (f1).

5. Présentoir réfrigéré (100) selon la revendication 4, où ledit système de réglage de la pression (P) comprend :
- un premier conduit (P1) et un second conduit (P2) disposés en position parallèle ;
- une soupape de régulation de pression (P3) disposée dans le second conduit (P2) ; et
- des moyens de sélection (M) aptes à activer le passage du premier fluide caloporteur (f1) dans le premier conduit (P1) ou dans le second conduit (P2).

6. Présentoir réfrigéré (100) selon l'une quelconque des revendications précédentes, où ladite structure de conservation/exposition (7) comprend une pluralités de bacs réfrigérés (70) disposés juxtaposés entre eux ; chaque bac réfrigéré (70) a un emplacement (71) apte à contenir une cuvette (V) pour des produits de confiserie ; où ladite structure de conservation/exposition (7) comprend une ou plusieurs cavités (72), remplies de glycol, qui entourent les bacs réfrigérés (70).

7. Présentoir réfrigéré (100) selon l'une quelconque des revendications précédentes, comprenant au moins un plan d'appui (75) qui est monté de manière amovible au-dessus de la structure de conservation/exposition (7) et qui est destiné à soutenir des produits de confiserie.

8. Présentoir réfrigéré (100) selon l'une quelconque des revendications précédentes, où ledit évaporateur (14) est un évaporateur du type à ailettes comprenant des ailettes parallèles entre elles qui génèrent une pluralité de cavités entre lesquelles passe le flux d'air (FA) généré par le ventilateur (8).
